# FASCICULE DE BREVET EUROPEEN

(11) **EP 1 024 037 B1**
(45) Date de publication et mention de la délivrance du brevet: **09.04.2003**
(21) Numéro de dépôt: 00400180.6
(22) Date de dépôt: 24.01.2000
(51) Int. Cl.: B60G 21/05, B60G 11/44, F16F 1/368

(54) **Train arrière de suspension pour véhicule automobile**
Hinterachsenaufhängung für ein Kraftfahrzeug
Rear axle suspension for a motor vehicle

(30) Priorité: 27.01.1999 FR 9900874
(43) Date de publication de la demande: 02.08.2000
(73) Titulaire: Peugeot Citroen Automobiles SA, 92200 Neuilly sur Seine (FR)
(72) Inventeur: Galtier, Lucien, 91390 Morsang sur Orge (FR)
(74) Mandataire: Thinat, Michel

(56) Documents cités:
- EP-A- 0 202 964
- EP-A- 0 243 191
- EP-A- 0 867 318
- WO-A-87/01078
- DE-A- 3 122 417
- FR-A- 2 662 643
- FR-A- 2 764 546
- PATENT ABSTRACTS OF JAPAN vol. 014, no. 552 (M-1056), 7 décembre 1990 (1990-12-07) & JP 02 234828 A (NHK SPRING CO LTD), 18 septembre 1990 (1990-09-18)
- PATENT ABSTRACTS OF JAPAN vol. 014, no. 026 (M-921), 18 janvier 1990 (1990-01-18) & JP 01 266009 A (MAZDA MOTOR CORP), 24 octobre 1989 (1989-10-24)
- PATENT ABSTRACTS OF JAPAN vol. 1996, no. 02, 29 février 1996 (1996-02-29) & JP 07 276949 A (DAIHATSU MOTOR CO LTD), 24 octobre 1995 (1995-10-24)

## Description

La présente invention concerne un train arrière de suspension pour véhicule automobile.

On connaît depuis de nombreuses années des trains arrière de véhicules automobiles du type comprenant deux bras tirés reliés entre eux par une travers déformable et à la caisse du véhicule par deux articulations élastiques, les extrémités des bras tirés opposées à celles articulées à la caisse recevant les roues arrière du véhicule.

Une telle disposition connue donne au train arrière, en vue de dessus, une forme sensiblement en H.

La suspension de la caisse du véhicule est assurée par deux ressorts hélicoïdaux dont les extrémités inférieures sont en appui sur les extrémités des deux bras tirés opposées à celles articulées à la caisse du véhicule.

Si ce type de train arrière connu est sans doute l'un des plus simples dans ses fonctions de guidage des roues arrière et de suspension de la caisse, il présente néanmoins l'inconvénient d'être encombrant à cause de la présence des deux ressorts hélicoïdaux de suspension.

On connaît également des trains arrière selon lesquels la suspension de la caisse de véhicule est assurée par des ressorts à lame en un matériau composite permettant de diminuer la masse de l'ensemble du train arrière.

Cependant, les éléments de la traverse déformable sont métalliques, de sorte que le gain de poids n'est pas optimum et, en outre, il est nécessaire de prévoir des liaisons fonctionnelles particulières des lames de suspension avec la traverse déformable pour ne pas contrarier le filtrage longitudinal des roues arrière.

Un train arrière de suspension pour véhicule automobil ayant les caractéristiques de préambule de la revendication 1 est décrit dans le document EP-A-0 867 318.

La présente invention a pour but d'éliminer les inconvénients ci-dessus des trains arrière connus en proposant un train arrière agencé de façon à réduire considérablement le nombre d'éléments le constituant et à obtenir un gain de poids considérable.

A cet effet, le train arrière de suspension pour véhicule automobile de l'invention, du type comprenant deux bras tirés reliés entre eux par une traverse déformable et ayant deux de leurs extrémités reliées à la caisse du véhicule par deux articulations élastiques et leurs deux autres extrémités opposées recevant les roues arrière, et deux lames formant ressorts de suspension travaillant en flexion associées respectivement aux deux bras tirés et articulées à leurs extrémités opposées à la caisse du véhicule, est caractérisé en ce que l'ensemble constitué par la traverse déformable, les deux bras tirés et les deux lames de suspension est monobloc et est réalisé en un même matériau composite.

Selon un premier mode de réalisation, chaque lame de suspension est solidaire de la partie arrière du bras tiré correspondant portant la roue arrière et s'étend en arrière du véhicule parallèlement à l'axe longitudinal de celui-ci.

Avantageusement, l'extrémité arrière de la lame de suspension est reliée à la caisse du véhicule par l'intermédiaire d'une jumelle de façon à transmettre l'effort de maintien en hauteur de la caisse du véhicule relativement au sol.

L'extrémité arrière de la lame de suspension est en forme de crochet en appui sous l'axe de liaison supérieur de la jumelle en étant située au dessus de l'axe de roue arrière correspondante.

Selon un deuxième mode de réalisation, chaque lame de suspension est solidaire de la partie arrière du bras tiré correspondant portant la roue arrière et s'étend vers l'arrière du véhicule en formant une boucle en C située dans un plan vertical parallèle à l'axe longitudinal du véhicule et dont la branche supérieure opposée à la branche inférieure raccordée à la partie arrière du bras tiré, est arc-boutée à la caisse du véhicule au-dessus de l'axe de roue arrière correspondante.

Avantageusement, la branche supérieure de la lame de suspension a son extrémité en forme de crochet en appui sous un axe transversal solidaire d'un petit longeron arrière situé sous le coffre arrière du véhicule et situé sensiblement dans le plan vertical contenant l'axe de roue arrière correspondante.

La branche inférieure de la lame de suspension en C est raccordée à une extension de la partie arrière du bras tiré située en dessous de cette partie.

Selon un troisième mode de réalisation, chaque lame de suspension est solidaire de la partie avant du bras tiré articulée à la caisse du véhicule et s'étend vers l'avant du véhicule parallèlement à l'axe longitudinal de celui-ci.

La lame de suspension a son extrémité avant reliée à la caisse du véhicule par l'intermédiaire d'une jumelle de façon à transmettre l'effort de maintien en hauteur de la caisse du véhicule relativement au sol.

L'extrémité avant de la lame de suspension est en forme de crochet en appui sur l'axe de liaison inférieur de la jumelle en étant située en dessous de l'axe de roue arrière correspondante.

Chaque amortisseur de suspension a son extrémité inférieure opposée à celle articulée à la caisse du véhicule, reliée de façon articulée à une extension solidaire de la partie arrière du bras tiré correspondant et située en dessous de cette partie.

Le train arrière comprend en outre une butée d'attaque solidaire de la caisse du véhicule et disposée au dessus de la lame de suspension correspondante pour limiter les débattements verticaux vers le haut de la lame de suspension.

Chaque fusée de roue arrière comprend une partie cylindrique rainurée solidarisée dans le matériau composite de la partie arrière du bras tiré correspondant.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant trois modes de réalisation de l'invention et dans lesquels :

La figure 1 est une vue arrière de la partie de train arrière de suspension conforme à l'invention d'un véhicule automobile associée à la roue droite de celui-ci.

La figure 2 est une vue en coupe suivant la ligne II-II de la figure 1.

La figure 3 est une vue de dessus suivant la flèche III de la figure 2 avec coupe partielle.

La figure 4 est une vue arrière semblable à celle de la figure 1 et représentant un train arrière de suspension suivant un deuxième mode de réalisation de l'invention.

La figure 5 est une vue en coupe suivant la ligne V-V de la figure 4.

La figure 6 est une vue de dessus suivant la flèche VI de la figure 5 avec coupe partielle.

La figure 7 est une vue arrière semblable à celle de la figure 1 et représentant un train arrière suivant un troisième mode de réalisation de l'invention.

La figure 8 est une vue en coupe suivant la ligne VIII-VIII de la figure 7.

La figure 9 est une vue de dessus suivant la flèche IX de la figure 8 avec coupe partielle.

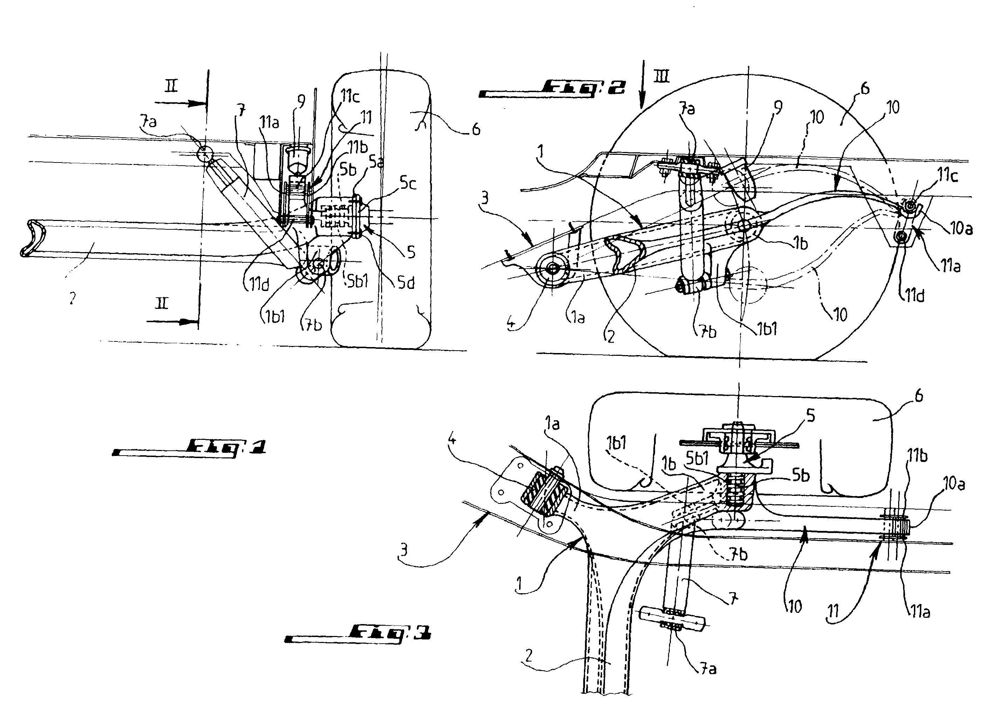

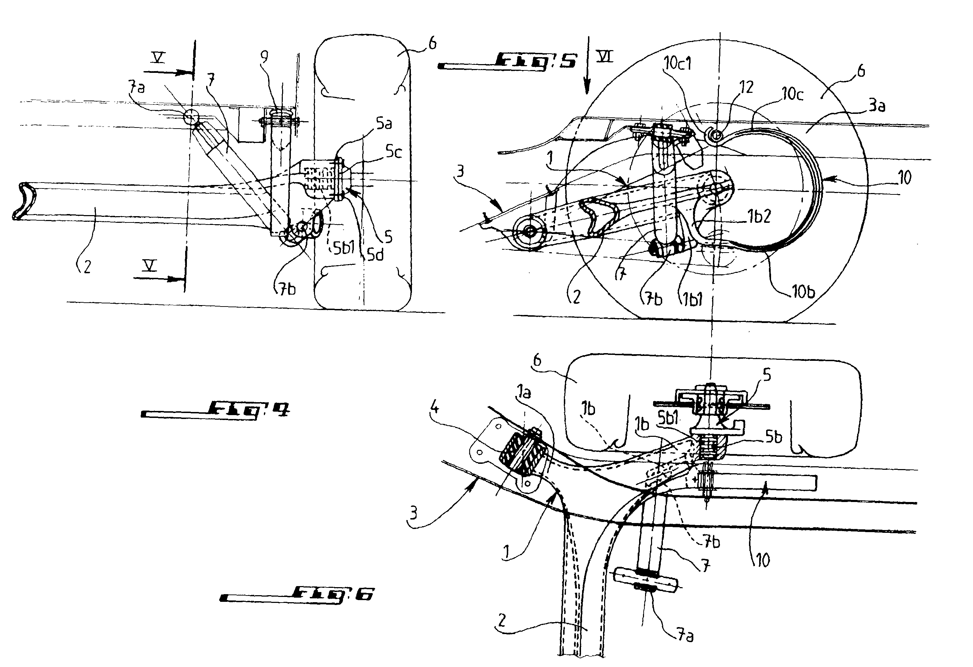

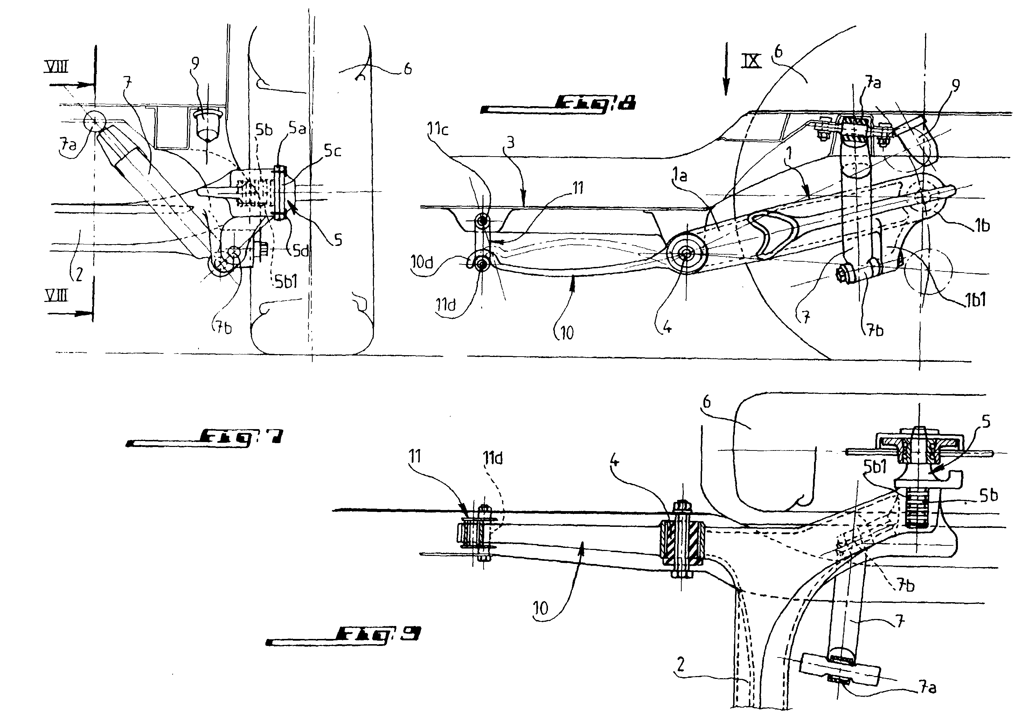

En se reportant aux figures 1 à 3, le train arrière de suspension pour véhicule automobile comprend deux bras tirés 1, dont un seul est représenté, reliés entre eux par une traverse déformable 2, chaque bras tiré 1 ayant une partie la s'étendant vers l'avant du véhicule, reliée à la caisse 3 du véhicule par l'intermédiaire d'une articulation élastique 4 et une partie 1b s'étendant vers l'arrière du véhicule et à laquelle est fixée la fusée 5 de la roue arrière correspondante 6.

Ce train arrière est ainsi configuré de manière à présenter en vue de dessus sensiblement la forme d'un H avec la partie centrale de la traverse 2 assurant par sa forme et sa dimension le maintien de la roue en carrossage et en pincement et ayant une raideur en torsion assurant la fonction de maintien en dévers de l'arrière du véhicule. La figure 2 montre que la traverse 2 présente en section transversale sensiblement la forme d'un coeur creux, mais cette forme peut être différente à condition qu'elle satisfasse le guidage ou le maintien de la roue suivant les critères qui viennent d'être énoncés.

La suspension de ce train comprend, associé à chaque roue arrière 6, un amortisseur 7 ayant sa partie supérieure 7a reliée de façon articulée à la caisse 3 du véhicule et sa partie inférieure 7b reliée de façon articulée au bras tiré 1.

Cet amortisseur est muni d'une butée interne de détente et, suivant l'espace disponible compte tenu de la longueur de l'amortisseur 7 et la course de piston, une butée d'attaque 9 peut être intégrée à celui-ci, cette butée étant représentée solidaire de la caisse 3.

La suspension du train arrière comprend en outre deux ressorts de suspension 10 chacun en forme de lame travaillant en flexion dans un plan vertical parallèle au plan de la roue arrière associée 6 et ayant l'une de ses extrémités raccordées au bras tiré correspondant 1 et son extrémité opposée reliée de façon articulée à la caisse 3 du véhicule.

Selon l'invention, l'ensemble constitué par les deux bras tirés 1, la traverse déformable 2 et les deux lames de suspension 10 est monobloc et est réalisé en un même matériau composite du type fibres ou tissus enrobés dans la résine de façon à obtenir un gain de poids sensible par rapport aux trains arrière connus.

La lame de suspension 10 est intégrée à la partie ou branche arrière 1b du bras tiré correspondant 1 et s'étend vers l'arrière du véhicule longitudinalement à ce dernier. Comme représenté en figure 2, la lame de suspension 10 est courbée vers le haut en position de repos du véhicule et peut se débattre en flexion dans le plan vertical parallèle au plan de roue entre deux positions extrêmes représentées en traits mixtes sur cette figure. La lame 10 permet ainsi, par sa raideur en flexion, de transmettre l'effort de maintien en hauteur par rapport au sol de la caisse 3 du véhicule.

Chaque lame de suspension 10 a son extrémité 10a opposée à la partie arrière 1b du bras tiré 1 reliée de façon articulée à la caisse 3 par l'intermédiaire d'une jumelle 11 constituée ainsi de deux bras 11a, 11b jumelés par deux axes de liaison respectivement supérieur 11c, situé au-dessus de l'axe de roue 6, et inférieur 11d. L'extrémité 10a de la lame 10 présente la forme d'un crochet en appui sous l'axe supérieur 11c de la jumelle 11 dont l'axe inférieure 11d est solidaire de la caisse 3 du véhicule. La jumelle 11 permet d'absorber les déplacements longitudinaux de la lame 10 au niveau de l'axe 11c de la jumelle 11 suivant la charge verticale qu'elle subit.

Chaque amortisseur 7 du train arrière est relié par son articulation élastique inférieure 7b à une extension 1b1 également réalisée en une seule pièce avec la partie arrière 1b du bras tiré 1 en s'étendant en dessous de cette partie arrière.

Chaque fusée 5 de roue arrière est fixée à l'extrémité de la partie arrière 1b du bras tiré correspondant 1 et, avantageusement, la fusée 5 est réalisée en deux parties comprenant respectivement un plateau 5a pourvu d'une partie cylindrique 5b à rainures 5b1 fixée dans la partie arrière 1b du bras tiré 1 et un autre plateau 5c solidaire de la fusée proprement dite 5 et fixé au plateau 5a par des vis de fixation 5d. Cette conception de la fusée 5 permet un usinage final de la face externe du plateau de liaison 5a de façon parallèle au plan de roue, ce qui permet par conséquent de bien maîtriser la position finale de ce plan de roue.

Chaque butée d'attaque 9 est disposée au-dessus de l'espace de débattement de la lame de suspension correspondante 10 de façon à limiter les déplacements verticaux vers le haut de celle-ci en agissant sur la lame 10 sensiblement au niveau de l'axe de roue arrière.

Les figures 4 à 6 représentent un deuxième mode de réalisation du train arrière de l'invention et les éléments communs à ceux du train arrière du premier mode de réalisation et accomplissant la même fonction que ceux-ci portent les mêmes références et ne seront pas à nouveau détaillés.

Selon ce second mode de réalisation, chaque lame de suspension 10 présente la forme d'un C dont la branche inférieure 10b est intégrée à la partie arrière 1b du bras tiré correspondant 1 et la branche supérieure 10c a son extrémité 10cl en appui sous un axe transversal 12 solidaire d'un petit longeron 3a de la caisse 3 situé sous le coffre arrière du véhicule, l'axe 12 étant disposé au-dessus de l'axe de roue arrière et situé dans le plan vertical contenant cet axe. L'extrémité 10cl de la lame de suspension 10 présente la forme d'un crochet en appui sous l'axe 12. La lame de suspension 10 est ainsi montée de façon arc-boutée pour exercer l'effort de maintien vers le haut par rapport au sol de la caisse 3 du véhicule.

La branche inférieure 10b de chaque lame de suspension 10 est solidaire d'une extension 1b2 intégrée à la partie arrière 1b du bras tiré 1 et située en dessous de cette partie.

Bien entendu, chaque lame de suspension 10 s'étend vers l'arrière du véhicule en étant disposée dans un plan vertical de débattement sensiblement parallèle au plan de la roue arrière correspondante 6.

Selon le troisième mode de réalisation de l'invention représenté aux figures 7 à 9 où les éléments identiques à ceux du premier mode de réalisation portent les mêmes références et ne seront donc pas décrits à nouveau, chaque lame de suspension 10 est reliée intégralement à la partie avant la du bras tiré correspondant 1 et s'étend vers l'avant du véhicule parallèlement à l'axe longitudinal de celui-ci de façon à travailler en flexion dans le plan vertical parallèle au plan de roue arrière. L'extrémité avant 10d de la lame de suspension 10 est reliée de façon articulée à la caisse 3 du véhicule par l'intermédiaire d'une jumelle 11 identique à la jumelle 11 du premier mode de réalisation et présente la forme d'un crochet en appui sur l'axe de liaison inférieur 11d de la jumelle 11 dont l'axe supérieur 11c est relié à la caisse 3. Comme pour la jumelle du premier mode de réalisation, la jumelle 11 permet d'absorber les déplacements longitudinaux de l'extrémité 10d de la lame de suspension correspondante 10 dus aux variations de la charge verticale que subit la lame de suspension 10. L'axe d'articulation 11d de la lame de suspension 10 est situé en dessous de l'axe de roue correspondante 6.

En réalisant comme décrit ci-dessus un train arrière de suspension en une seule pièce et en un même matériau composite, on réduit considérablement le nombre d'éléments constituant ce train. De la sorte, on obtient un gain de poids par rapport à un train arrière connu à base d'éléments essentiellement métalliques, ce qui diminue les masses non suspendues du véhicule, génératrices de vibrations inconfortables. De plus, la conception du train arrière conforme à l'invention facilite son montage à la caisse du véhicule, s'accompagnant d'un gain de temps d'assemblage appréciable de ce train. Enfin, le matériau composite des éléments du train arrière élimine tout problème de corrosion.

## Revendications

1. Train arrière de suspension pour véhicule automobile comprenant deux bras tirés (1) reliés entre eux par une traverse déformable (2) et ayant deux de leurs extrémités reliées à la caisse (3) du véhicule par deux articulations élastiques (4) et leurs deux autres extrémités opposées recevant les roues arrière (6), et deux lames (10) formant ressorts de suspension travaillant en flexion associées respectivement aux bras tirés (1) et articulées à leurs extrémités opposées à la caisse (3) du véhicule, **caractérisé en ce que** l'ensemble constitué par la traverse déformable (2), les deux bras tirés (1) et les deux lames de suspension (10) est monobloc et est réalisé en un même matériau composite.

2. Train arrière selon la revendication 1, **caractérisé en ce que** chaque lame de suspension (10) est solidaire de la partie arrière (1b) du bras tiré correspondant (1) portant la roue arrière (6) et s'étend en arrière du véhicule parallèlement à l'axe longitudinal de celui-ci.

3. Train arrière selon la revendication 2, **caractérisé en ce que** l'extrémité arrière de la lame de suspension (10) est reliée à la caisse (3) du véhicule par l'intermédiaire d'une jumelle (11) de façon à transmettre l'effort de maintien en hauteur de la caisse (3) du véhicule relativement au sol

4. Train arrière selon la revendication 3, **caractérisé en ce que** l'extrémité arrière (10a) de la lame de suspension (10) est en forme de crochet en appui sous l'axe (11c) de liaison supérieur de la jumelle (1) en étant située au-dessus de l'axe de roue arrière correspondante (6).

5. Train arrière selon la revendication 1, **caractérisé en ce que** chaque lame de suspension (10) est solidaire de la partie arrière (1b) du bras tiré correspondant (1) portant la roue arrière (6) et s'étend vers l'arrière du véhicule en formant une boucle en C située dans un plan vertical parallèle à l'axe longitudinal du véhicule et dont la branche supérieure (10c) opposée à la branche inférieure (10b) raccordée à la partie arrière (1b) du bras tiré (1), est arc-boutée à la caisse (3) du véhicule au-dessus de l'axe de roue arrière correspondante (6).

6. Train arrière selon la revendication 5, **caractérisé en ce que** la branche supérieure (10c) de la lame de suspension (10) a son extrémité (10c1) en forme de crochet en appui sous un axe transversal (12) solidaire d'un petit longeron arrière (3a) situé sous le coffre arrière du véhicule et disposé sensiblement dans le plan vertical contenant l'axe de roue arrière correspondante (6).

7. Train arrière selon la revendication 5 ou 6, **caractérisé en ce que** la branche inférieure (10b) de la lame de suspension (10) est raccordée à une extension (1b2) de la partie arrière (1b) du bras tiré (1) située en dessous de cette partie.

8. Train arrière selon la revendication 1, **caractérisé en ce que** chaque lame de suspension (10) est solidaire de la partie avant (1a) du bras tiré (1) articulée à la caisse (3) du véhicule et s'étend vers l'avant du véhicule parallèlement à l'axe longitudinal de celui-ci.

9. Train arrière selon la revendication 8, **caractérisé en ce que** la lame de suspension (10) a son extrémité avant (10d) reliée à la caisse (3) du véhicule par l'intermédiaire d'une jumelle (11) de façon à transmettre l'effort de maintien en hauteur de la caisse (3) du véhicule relativement au sol.

10. Train arrière selon la revendication 9, **caractérisé en ce que** l'extrémité avant (10d) de la lame de suspension (10) est en forme de crochet en appui sur l'axe de liaison inférieur (11d) de la jumelle (11) en étant située en-dessous de l'axe de roue arrière correspondante.

11. Train arrière selon l'une des revendications précédentes, **caractérisé en ce que** chaque amortisseur de suspension (7) a son extrémité inférieure opposée à celle articulée à la caisse (3) du véhicule, reliée de façon articulée à une extension (1b1) solidaire de la partie arrière (1b) du bras tiré correspondant (1) et située en dessous de cette partie.

12. Train arrière selon l'une des revendications précédentes, **caractérisé en ce qu'**il comprend une butée d'attaque (9) solidaire de la caisse (3) du véhicule et disposée au-dessus de la lame de suspension correspondante (10) pour limiter les débattements verticaux vers le haut de la lame de suspension (10).

13. Train arrière selon l'une des revendications précédentes, **caractérisé en ce que** chaque fusée (5) de roue arrière (6) comprend une partie cylindrique rainurée (5b) fixée dans le matériau composite de la partie arrière (1b) du bras tiré correspondant (1) et un plateau (5a) solidaire de la partie cylindrique (5b), auquel est fixé, par des vis (5d), le plateau (5c) de la fusée (5).

## Claims

1. A rear axle suspension for a motor vehicle comprising two trailing arms (1) which are interconnected by a deformable crossbeam (2), two of the ends of which trailing arms (1) are connected to the body structure (3) of the vehicle by two flexible mountings (4) and the two other, opposite ends of which carry the rear wheels (6), and two blades (10) forming suspension springs working in deflection which are associated respectively with the trailing arms (1) and are articulated at their opposed ends to the body structure (3) of the vehicle, **characterised in that** the totality constituted by the deformable crossbeam (2), the two trailing arms (1) and the two suspension blades (10) is formed in one piece and is made of a single composite material.

2. A rear axle according to claim 1, **characterised in that** each suspension blade (10) is integral with the rear portion (1b) of the corresponding trailing arm (1) carrying the rear wheel (6) and extends rearwardly with respect to the vehicle parallel to the longitudinal axis of same.

3. A rear axle according to claim 2, **characterised in that** the rear end of the suspension blade (10) is connected to the body structure (3) of the vehicle by the intermediary of a shackle (11) so as to transmit the effort of maintaining the height of the body structure (3) of the vehicle relative to the ground.

4. A rear axle according to claim 3, **characterised in that** the rear end (10a) of the suspension blade (10) is in the form of a hook bearing under the upper connecting spindle (11c) of the shackle (11) while being located above the axis of the corresponding rear wheel (6).

5. A rear axle according to claim 1, **characterised in that** each suspension blade (10) is integral with the rear portion (1b) of the corresponding trailing arm (1) carrying the rear wheel (6) and extends towards the rear of the vehicle, forming a C-shaped loop which is located in a vertical plane parallel to the longitudinal axis of the vehicle and the upper segment (10c) of which, opposed to the lower segment (10b) connected to the rear portion (1b) of the trailing arm (1), bears against the body structure (3) of the vehicle above the axis of the corresponding rear wheel (6).

6. A rear axle according to claim 5, **characterised in that** the end (10cl) of the upper segment (10c) of the suspension blade (10) is in the form of a hook bearing under a transverse spindle (12) rigidly attached to a small rear side member (3a) located below the rear luggage compartment of the vehicle and disposed substantially in the vertical plane containing the axis of the corresponding rear wheel (6).

7. A rear axle according to claim 5 or 6, **characterised in that** the lower segment (10b) of the suspension blade (10) is linked to an extension (1b2) of the rear portion (1b) of the trailing arm (1) located below said portion.

8. A rear axle according to claim 1, **characterised in that** each suspension blade (10) is integral with the front portion (1a) of the trailing arm (1) articulated to the body structure (3) of the vehicle and extends towards the front of the vehicle parallel to the longitudinal axis of same.

9. A rear axle according to claim 8, **characterised in that** the front end (10d) of the suspension blade (10) is connected to the body structure (3) of the vehicle by the intermediary of a shackle (11) so as to transmit the effort of maintaining the height of the body structure (3) of the vehicle relative to the ground.

10. A rear axle according to claim 9, **characterised in that** the front end (10d) of the suspension blade (10) is in the form of a hook bearing on the lower connecting spindle (11d) of the shackle (11) and situated below the axis of the corresponding rear wheel.

11. A rear axle according to one of the preceding claims, **characterised in that** the lower end of each shock absorber of the suspension (7) opposed to the end articulated to the body structure (3) of the vehicle is connected in an articulated manner to an extension (1b1) integral with the rear portion (1b) of the corresponding trailing arm (1) and located below said portion.

12. A rear axle according to one of the preceding claims, **characterised in that** it comprises a bump stop (9) rigidly mounted on the body structure (3) of the vehicle and disposed above the corresponding suspension blade (10) to limit the vertical upward deflections of the suspension blade (10).

13. A rear axle according to one of the preceding claims, **characterised in that** the stub axle (5) of each rear wheel (6) comprises a grooved cylindrical portion (5b) fixed in the composite material of the rear portion (1b) of the corresponding trailing arm (1) and a plate (5a) rigidly attached to said cylindrical portion (5b), to which the plate (5c) of the stub axle (5) is fixed by means of screws (5d).

## Patentansprüche

1. Hinterradaufhängung für Kraftfahrzeuge, mit zwei gezogenen Lenkern (1), die durch eine verformbare Traverse (2) miteinander verbunden sind und von denen zwei Endabschnitte durch zwei elastische Gelenke (4) mit dem Fahrzeugaufbau (3) verbunden sind und von denen zwei weitere, gegenüberliegende Endabschnitte die Hinterränder (6) aufnehmen, und mit zwei Blattfedern (10), welche biegebeaufschlagte Aufhängungsfedern bilden, die den jeweiligen gezogenen Lenkern (1) zugeordnet sind und an ihren gegenüberliegenden Endabschnitten am Fahrzeugaufbau (3) angelenkt sind, **dadurch gekennzeichnet, dass** die Einheit aus verformbarer Traverse (2), gezogenen Lenkern (1) und beiden Blattfedern (10) aus einem Stück und aus ein und demselben Verbundmaterial hergestellt ist.

2. Hinterradaufhängung nach Anspruch 1, **dadurch gekennzeichnet, dass** jede Aufhängungsfeder (10) fest mit dem das Hinterrad (6) tragenden hinteren Teil (1b) des entsprechenden gezogenen Lenkers (1) verbunden ist und sich parallel zur Längsachse des Fahrzeugs zu dessen Heck erstreckt.

3. Hinterradaufhängung nach Anspruch 2, **dadurch gekennzeichnet, dass** das hintere Ende der Aufhängungsfeder (10) mit dem Fahrzeugaufbau (3) durch eine Lasche (11) so verbunden ist, dass die Kraft zum Halten des Fahrzeugaufbaus (3) in der Höhe relativ zum Boden übertragen wird.

4. Hinterradaufhängung nach Anspruch 3, **dadurch gekennzeichnet, dass** das hintere Ende (10a) der Aufhängungsfeder (10) hakenförmig in Abstützung unter der oberen Verbindungsachse (11c) der Lasche (1) ausgebildet ist, wobei es sich oberhalb der Achse des entsprechenden Hinterrads (6) befindet.

5. Hinterradaufhängung nach Anspruch 1, **dadurch gekennzeichnet, dass** jede Aufhängungsfeder (10) fest mit dem das Hinterrad (6) tragenden hinteren Teil (1b) des entsprechenden gezogenen Lenkers (1) verbunden ist und sich zum Heck des Fahrzeugs erstreckt, indem sie eine C-förmige Schleife bildet, die in einer parallel zur Längsachse des Fahrzeugs verlaufenden senkrechten Ebene liegt und deren oberer Schenkel (10c), welcher dem an das hintere Teil (1b) des gezogenen Lenkers (1) angeschlossenen unteren Schenkel (10b) gegenüberliegt, in Bogenform am Fahrzeugaufbau (3) oberhalb der Achse des entsprechenden Hinterrads (6) anliegt.

6. Hinterradaufhängung nach Anspruch 5, **dadurch gekennzeichnet, dass** der obere Schenkel (10c) der Aufhängungsfeder (10) an einem Ende (10c1) hakenförmig in Abstützung unter einer Querachse (12) ausgebildet ist, die fest mit einem kleineren, hinteren Längsholm (3a) verbunden ist, der sich unter dem hinten liegenden Kofferraum des Fahrzeugs befindet und im wesentlichen in der die Achse des entsprechenden Hinterrads (6) enthaltenden, senkrechten Ebene liegt.

7. Hinterradaufhängung nach Anspruch 5 oder 6, **dadurch gekennzeichnet, dass** der untere Schenkel (10b) der Aufhängungsfeder (10) an einen Abschnitt (1b2) des hinteren Teils (1b) des gezogenen Lenkers (1) angeschlossen ist, der sich unterhalb dieses Teils befindet.

8. Hinterradaufhängung nach Anspruch 1, **dadurch gekennzeichnet, dass** jede Aufhängungsfeder (10) fest mit dem vorderen Teil (1a) des gezogenen Lenkers (1) verbunden ist, der am Fahrzeugaufbau (3) angelenkt ist und sich zum vorderen Bereich des Fahrzeugs parallel zu dessen Längsachse erstreckt.

9. Hinterradaufhängung nach Anspruch 8, **dadurch gekennzeichnet, dass** die Aufhängungsfeder (10) an ihrem vorderen Ende (10d) mit dem Fahrzeugaufbau (3) durch eine Lasche (11) so verbunden ist, dass die Kraft zum Halten des Fahrzeugaufbaus (3) in der Höhe relativ zum Boden übertragen wird.

10. Hinterradaufhängung nach Anspruch 9, **dadurch gekennzeichnet, dass** das vordere Ende (10d) der Aufhängungsfeder (10) hakenförmig in Abstützung an der unteren Verbindungsachse (11d) der Lasche (11) ausgebildet ist, wobei es sich unterhalb der Achse des entsprechenden Hinterrads befindet.

11. Hinterradaufhängung nach einem der vorangehenden Ansprüche, **dadurch gekennzeichnet, dass** jeder Federungsdämpfer (7) an seinem unteren Ende, das dem am Fahrzeugaufbau (3) angelenkten Ende gegenüberliegt, gelenkig mit einem Abschnitt (1b1) verbunden ist, der fest mit dem hinteren Teil (1b) des entsprechenden gezogenen Lenkers (1) verbunden ist und sich unterhalb dieses Teils befindet.

12. Hinterradaufhängung nach einem der vorangehenden Ansprüche, **dadurch gekennzeichnet, dass** sie einen Angriffsanschlag (9) enthält, der fest mit dem Fahrzeugaufbau (3) verbunden ist und oberhalb der entsprechenden Aufhängungsfeder (10) angeordnet ist, um die senkrechten Ausfederungswege der Aufhängungsfeder (10) nach oben zu begrenzen.

13. Hinterradaufhängung nach einem der vorangehenden Ansprüche, **dadurch gekennzeichnet, dass** jeder Radzapfen (5) des Hinterrads (6) einen zylinderförmigen Rillenteil (5b) enthält, der im Verbundmaterial des hinteren Teils (1b) des entsprechenden gezogenen Lenkers (1) befestigt ist, und eine Scheibe (5a) aufweist, die fest mit dem zylinderförmigen Teil (5b) verbunden ist und an welcher die Scheibe (5c) des Radzapfens (5) durch Schrauben (5d) befestigt ist.
